(19) **Europäisches Patentamt European Patent Office Office européen des brevets**

(11) **EP 1 561 056 B1**

(12) **EUROPEAN PATENT SPECIFICATION**

(45) Date of publication and mention
of the grant of the patent:
**22.09.2010 Bulletin 2010/38**

(21) Application number: **03757733.5**

(22) Date of filing: **21.10.2003**

(51) Int Cl.:
**F16K 15/02** (2006.01)

(86) International application number:
**PCT/DK2003/000713**

(87) International publication number:
**WO 2004/036097 (29.04.2004 Gazette 2004/18)**

(54) **A SAFETY VALVE**

SICHERHEITSVENTIL

SOUPAPE DE SURETE

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **21.10.2002 DK 200201597
21.10.2002 US 419592 P**

(43) Date of publication of application:
**10.08.2005 Bulletin 2005/32**

(73) Proprietor: **Protect-Air AG
6342 Baar (CH)**

(72) Inventors:
• **BONNE, Adam
DK-3480 Fredensborg (DK)**
• **LEHD, John, F.
D-61479 Glashütten (DE)**

(74) Representative: **Plougmann & Vingtoft A/S
Sundkrogsgade 9
P.O. Box 831
2100 Copenhagen Ø (DK)**

(56) References cited:
**US-A- 2 498 482     US-A- 4 131 235**

**Description**

**Field of the invention**

The present invention relates a safety valve for limiting a flow in a flow line. In particular the invention relates to a safety valve which is adapted to limit flow in two directions in a flow line so that a pressure difference between a first end and a second end triggers the closing of the valve.

US 2,498,482 discloses a check valve device comprising a casing having a fluid inlet chamber and a fluid outlet chamber and partition means separating said chambers. The partition means have a bore connecting said chambers and a valve seat at each of the opposite ends of said bore. A valve in each of said chambers is arranged to cooperate with the respective valve seat to close communication between the respective chamber and the bore. The check valve device further comprises spring means acting on said valves for seating the valve in said outlet chamber and for unseating the other valve.

**Description of the invention**

It may be an object of a preferred embodiment of the present invention to provide an improved safety valve which is adapted to limit flow in a flow line in two directions.

According to a first aspect, the present invention relates to an apparatus for controlling flow in a flowline under pressure, said apparatus comprising

- a flow passage having a first end and a second end, and
- hindering means for reducing the flow in the flow passage, the hindering means being arranged to move between a first and a second position under influence of a pressure difference between the first end and the second end of the flow passage,

wherein the reduction of the flow in the flow passage is larger when the hindering means is in the first and second position than when the hindering means is in an intermediate position between said first and second positions, and
wherein it allows flow in the flow passage which over position the hindering means is in.

The valve may be used for any kind of gas or liquid such as pressurised gas used in a pneumatic system, the gas may be natural air, or a semi-pure or pure concentration of gasses such as oxygen, carbon oxide, carbon monoxide, nitrogen, flammable gasses e.g. acetylene or passive gasses such as argon or toxic gasses. The valve may also be used in systems comprising liquids such as hydraulic liquids, acids, bases, water, salt water, radio active liquids, toxic liquids, flammable liquids such as petrol, oil, acetylene, alcohol.

The valve may be integrated in hydraulic systems, pneumatic systems, hospital liquid systems, washing machines, dishwashing machines, cars, motorcycles, ships or any other system. In a car the valve may be used in the fuel supply system, or in the break fluid system. In a ship the valve may further be used in systems for transporting liquids such as fuel oil. Systems may comprise one valve or a plurality of valves such that leaks or breaks in different parts of the system may be controlled in a desired manner.

The valve may be used In connection with a point in a flow line where a tool or fluid line may be connected. Thus if a break or a leak occurs at a point after the connection point the valve will minimise the damages. Such damages could be made by a unbridled flow line which could fly around In e.g. a workshop and damage e.g. expensive cars. Another use of the valve could be In the beginning of a flow line just after a point of connection. If such a flow line by accident is removed from the point of connection the pressurised fluid in the flow line will escape slowly as the valve will close such that the pressurised fluid can only escape through a leaking passage of the valve.

The hindering means may be provided with apertures which are blocked when the hindering means is positioned in the first or the second position. Thus when the hindering means is positioned In an Intermediate position the flow area may be bigger.

When the hindering means is positioned In the first and/or the second position the valve may in this application be said to be closed even though the valve is not completely closed-as a leaking passage(s) is provided in the valve.

The flow passage could have any form e.g. the flow line could be a substantially straight passage. In other embodiments the flow passage could comprise a plurality of passages such as two or three or four or five or six or seven or eight or nine or ten. The passages could be interconnected In series or in parallel. The passages could comprise one or more curvatures having different radii of curvature. In some embodiments a part of the passage may be transverse to another part of the passage such as 45 degrees or substantially orthogonal. The cross-sectional shape of the passage(s) can be round, or elliptic or circular or polygonal with three edges or four edges or five edges or six edges or seven edges or eight edges or nine edges or ten edges. The cross-sectional area and/or shape of the passage(s) may change along the passage.

The valve may be constructed such that the flow passage Is bigger for some intermediate positions of the hindering means than for other. E.g. the flow passage may be constructed such that when the hindering means is positioned half way between the first position and the second position the flow passage Is bigger than for any other position of the hindering means.

In some embodiments the hindering means may be positioned in the first position when the pressure in the second end is higher than the pressure In the first end. In other embodiments the hindering means may be positioned in the second position when the pressure In the first end is higher than the pressure In the second end.

Furthermore some embodiments of the invention may be made such that the hindering means is positioned In the first position when the pressure difference between the second end and the first end is higher than a first predetermined closing value. The predetermined value may be an exact valve such as 0,01 bar or 0,05 bar or 0,1 bar or 0,3 bar or 0,5 bar or 0,7 bar or 1 bar or 5 bar or 10 bar or 15 bar or 30 bar or 50 bar or 100 bar or 250 bar or 500 bar or 750 bar or 1000 bar. In other embodiments the pressure difference may be a relative pressure difference such a pressure difference of 0,1 % or 0,5 % or 1 % or 5 % or 10% or 20 % or 30% or 40% or 50 % or 60% or 70% or 80 % or 90% or 95%.

Additionally the hindering means may be positioned In the second position when the pressure difference between the first end and the second end is higher than a second predetermined closing value. The second predetermined closing value may be set using any of the aforementioned criteria.

In some embodiments the first predetermined closing value may be substantially equal to the second predetermined closing value. In other embodiments the first and the second closing value may be different e.g. such that the pressure in the first end must be 0,5 bar higher than the pressure in the second end before the hindering means is positioned in the second position. At the same time the pressure in the second end may only have to be 0,1 bar higher than the pressure in the first end before the hindering means Is positioned In the first position. This may be realised by providing two hindering means adapted to operate In different directions and by providing biasing means with different biasing forces.

The biasing means may be adapted to bias the hindering means towards a predetermined position. The predetermined position may be a position between the first position and the second position. E.g. the biasing means may be adapted to position the hindering means halfway between the first position and the second position. In other embodiment the predetermined position may be identical to the first position and/or the second position.

The biasing force may be non-adjustable but could also in other embodiments be adjustable so as to change a biasing force and/or the predetermined position. The biasing force and/or position may be adjustable by means of an electrical adjustable element adapted to change the biasing force. E.g. a pizzo electric element or an electromagnetic element. Such adjustment may be done on the outer surface of the valve but could also be done by means of a remote control communicating wired or wireless with the valve.

In other embodiments the biasing force and the position of the hindering means may be changed mechanically e.g. such that the user of the valve may turn a handle on the outside of the valve or push a button. In other embodiments the biasing force and/or the predetermined position may be adjusted dependent on a temperature. Thus the valve may open or close dependent of the temperature of the fluid and or the external temperature outside the valve. E.g. the valve may close when the temperature drops below the freezing point such that water will not continue to pass through the valve. In this way it may be prevented that the water freezes into ice. In other embodiments the valve may close when (or before) a gas reaches a flammable or toxic level. The closing of the valve may be determined dependent on a temperature in a working area. The temperature control of the valve may be done by means of thermo-mechanical elements or by means of electronics.

The biasing force and/or the predetermined position may be adjusted dependent on pressure. Thus In some embodiments the valve may close when the pressure reaches a predetermined level Independent of the pressure difference between the first end and the second end. In other embodiments the valve may be closed when a pressure difference between the internal pressure of the valve and the external pressure reached a predetermined value.

Furthermore the biasing force and/or the predetermined position may be adjusted dependent on fluid properties. Thus in some embodiments a certain viscosity of the fluid may close or open the valve e.g. the valve may close if too much oil is present in the pressurised air.

All the aforementioned ways of controlling the valve may be combined In any way such that e.g. a valve may close when too much oil is present in the pressurised air while at the same time the valve may close when the pressure difference between the internal pressure and the external pressure exceeds a predetermined value.

The biasing means (or element) may be a spring such as a helical spring or a disc or any other kind of spring. In other embodiments the biasing force may be provided by utilising the pressure In the flow system. The valve may comprise one or more hindering means which may be provided in parallel or in series. E.g. the valve may be constructed such that two hindering means with corresponding biasing means (elements) open at different pressure differences thus the valve may open the flow passage in two steps e.g. such that the flow passage increases. This means that when a flow line has been connected, the pressure may be rebuild in the flow line, first slowly and then faster.

In some embodiments the first and the second position may be provided with contact surfaces adapted to collaborate with corresponding contact surfaces of the hindering means so as to provide a substantially tight seal when the hindering means is positioned In the first and the second position respectively. The contact surfaces of the first position and the second position may be different in shape and size. At least a part of at least one contact surface may comprise a sealing member. Such a sealing member may comprise a resilient material, such as natural rubber or synthetic rubber or a plastic material such as PEH, EVA, PP, PS, SB, SAN, ABS, POM, PPO, PBTP, PETP, PSF, PPS, PA or any combination thereof. The sealing member may also comprise a ceramic material.

The effective cross-sectional area of the flow passage may be 800% larger when the hindering means is In an intermediate position than when the hindering means is in the first position and/or the second position, such as 700% larger, such as 600% larger, such as 500% larger, such as 400% larger, such as 300% larger, such as 200% larger, such as 100% larger.

The hindering means may be adapted to slide between the first and the second position. This may be done along a substantially straight line but cound also be done along a curve, e.g. an S-shaped curve. The line or curve may be parallel to a line extending between the first end and the second end but could also be transverse to said line such as orthogonal.

The hindering means may also be adapted to rotate between the first and the second position. Furthermore at least a part of the hindering means may be pivotally connected to the apparatus e.g. a wall of the apparatus. The axis rotation may be parallel to a line extending between the first end and the second end of the valve, but could also be transverse e.g. ortogonal.

According to the invention the valve further comprise a leaking passage adapted to provide a flow channel between the first end and the second end, when the hindering means is positioned in the first position and/or the second position. The size of the leaking passage relatively to the flow passage may be such that it is small enough to prevent the flow line from flying around in the air when a leak or a break has occurred in the flow line but big enough to fill the flow line again as fast as possible when the flow line has be reconnected and the leak or damage has been repaired. The leaking passage may be provided with a further passage so as to enable the valve to open and close in two steps.

In some embodiments the leaking passage may be provided in the hindering means, while in other embodiments the leaking passage may be provided in any other part of the valve than the hindering means. In some embodiments leaking passages may both be provided in the hindering means and In any other part of the valve than the hindering means.

The valve may be provided with means for making sound or noise or any other audio signal. Thus in some embodiments an audio signal may be provided when the hindering means is positioned In the first and/or the second position. A whistle may be provided such that when the hindering means is provided In the first or the second position the pressurised air in the system may blow through the whistle so as to indicate that the valve is in one of said positions.

The valve may be provided with at least one pressure indicator adapted to indicate the pressure In at least a part of the flow passage. The indicator may be of a binary nature indicating pressure or no pressure. In other embodiments the indicator may indicate the pressure on a scale such as a number scale or a colour scale. The pressure may be indicated in the first end and/or the second end and/or In the leaking passage and/or the flow passage. In some embodiments the Indicator may indicate the type of fluid present In the valve or the temperature of the fluid.

At least a part of the passage may comprise a transparent material, so as allow visual inspection of the fluid and/or the position of the hindering means.

The valve may further comprise means for locking the hindering means in the first and/or the second position. Said locking means may be operated from the outer side of the valve or may be operated by means of an electronic lock or a magnetic lock. Thus In some embodiments the hindering means may comprise a magnetic material which by means of en electromagnet may be locked In a predetermined position such as the first position and/or the second position and/or an intermediate position.

The apparatus may comprise a metallic material selected from the group consisting of iron, steel, aluminium, magnesium, titanium, copper, brass, nickel, zinc, tin, lead, chrome, wolfram, bronze, gold, sliver and platinum. The apparatus may comprise a plastic material and/or a composite material and/or a fibre material. E.g. the apparatus may comprise PEH and/or EVA and/or PP and/or PS and/or SB and/or SAN and/or ABS and/or POM and/or PPO and/or PBTP and/or PETP and/or PSF and/or PPS and/or PA.

The apparatus may comprise locking means adapted to lock a connector In a locking position, the connector being a connecting element of a flow line. Thus the apparatus may be integrated in a connector for a flow line such that the connector both serves as a connector and as a safety valve. Furthermore the valve may be Integrated In a tap for water or pressurised air or any other kind of liquid or gas.

The apparatus may be adapted to operation conditions of 1000 bar or 900 bar or 800 bar or 700 bar or 600 bar or 500 bar or 400 bar or 300 bar or 200 bar or 100 bar. The apparatus may be adapted to operating conditions between -40 degrees Celsius and 300 degrees Celsius or between -20 degrees Celsius and 200 degrees Celsius or between - 10 degrees Celsius and 150 degrees Celsius or 0 degrees Celsius and 100 degrees Celsius.

The Apparatus may be adapted for a flow rate of at least 50000 litres per minute or at least 25000 litres per minutes or at least 10000 litres per minutes or at least 7500 litres per minutes or at least 5000 litres per minutes or at least 2500 litres per minutes or 1000 litres per minutes or at least 500 litres per minutes or 100 litres per minute.

## Detailed description of the figures

Preferred embodiments of the invention will be described in detail below with reference to the accompanying figures 1-6.

Fig. 1 shows a safety valve according to the present invention, and
Figs. 2-6 shows further embodiments of the Invention.

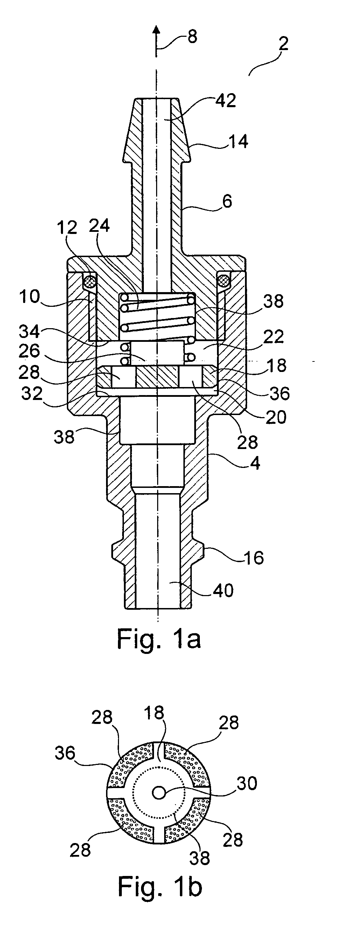

In fig. 1a is shown a safety valve 2 according to the present invention. The safety valve 2 comprises an upstream part 4 and a down stream part 6. Upstream and downstream being defined by the arrow 8. The valve may be adapted for flow of any fluid and in any direction.

The upstream part 4 and the downstream part 6 are attached to each other by means of a screw thread 10. In some embodiments the two parts may also be attached to each other In other ways such as by means of welding, gluing or an interference fit where the outer diameter of the inner part and the inner diameter of the outer part are chosen so as to provide a tight seal between the two parts. An advantage of attaching the two parts In a way where they can not be easily detached e.g. by means of welding or gluing is that it may not be possible for a user to disassemble the valve and then assemble it in a wrong way. Thus accidents occurring from such a wrong assembling may be avoided. Further more it is an advantage for the producer as such wrong assembling may easily be detected.

A sealing member 12 is provided between the upstream part 4 and the down stream part 6. The sealing member may be made from a resilient material comprising a rubber material (natural and/or synthetic rubber) and/or a plastic material and/or a metallic material and/or a ceramic material. In some embodiments a plurality of sealing members may be provided such as two or three or four or five or six or seven or eight or nine or ten. The sealing properties may also be provided by application of a resilient surface on the upstream and the downstream part.

The down stream part 6 is provided with engaging means 14 which may be adapted to engage an annular body e.g. a hose (not shown In the figure). The engaging means may comprise a lock or may be made such that an interference fit may ensure a tight seal between the down stream part 6 and an annular body. As an example the down stream part may be provided with edges which may have a beard effect. The down stream part may also comprise a screw thread or have a shape which is adapted for engegement with a standard snap lock system. Such a snap lock system may be any snap lock system such as systems according to ISO 7241, ISO 6150, European standard 7,2, European standard 7,4, ARO 210, British profile (BP), a Rectus series, a Hansen Series or US military specification C4109.

In fig. 1a the upstream part 4 is provided with snap lock engaging means 16 for engaging a standard snap lock system. The upstream part may be adapted to any standard snap lock system e.g. one of the aforementioned.

The valve is provided with a piston 18 which is adapted to move between a first position 20 and a second position 22. In the figure the piston 18 is positioned In an Intermediate position between the first position and the second position. The piston is biased by a biasing means 24, adapted to force the piston towards the first position 20. The biasing means in the figure is a spring but could be any other biasing means such as a means utilising the pressure in the flow line. The piston has a protrusion 26 which is adapted to engage the spring.

When the piston is positioned in the intermediate position the fluid may flow in the flow, apertures 28 and through the leaking passage 30. When the piston 18 is In the first position or the second position the fluid may only flow through the leaking passage 30 as a seal is provided between the piston and contact surfaces 32 and 34 respectively. In fig 1b a first Inner circumference 36 of the area in the valve where the piston is positioned is indicated as well as a second inner circumference 38 Is indicated. The inner circumferences are also Indicated in figure 1a. It may be seen in figure 1a that the there is no coincidence between the apertures 28 and the second inner circumferences and thus the fluid may only flow through the leaking passage 30. The contact surfaces 32 and 34 may be provided with a sealing means such as a rubber material or a ceramic material.

From the above description it may be seen that when the no pressure is applied to the first end 40 and the second end 42 the valve is closed (except from the leaking passage 30) as the piston 30 is biased against the contact surface 32.

The opening and the closing of the valve is determined by the forces applied to the valve. Three forces may be applied to the valve:

| | |
|---|---|
| $F_{\text{First end}}$ = | which is the force applied to the surface of the valve by the fluid pressure on the first end side of the valve, |
| $F_{\text{Second end}}$ = | which is the force applied to the surface of the valve by the fluid pressure on the second end side of the valve, and |
| $F_{\text{Bias}}$ = | which is the force applied to valve by the biasing means. |

The valve 18 is in an intermediate position when $F_{\text{First end}} = F_{\text{Second end}} + F_{\text{Bias}}$.

The valve is closed and biased towards the first position when $F_{\text{First end}} < F_{\text{Second end}} + F_{\text{Bias}}$.

The valve is closed and biased towards the second position when $F_{\text{First end}} > F_{\text{Second end}} + F_{\text{Bias}}$.

When designing the valve the following formulas may be used

$$F_{Bias} = \frac{D^2 \cdot \pi \cdot \Delta P}{4} \quad [Kp]$$

$$Q_L = \frac{d^2 \cdot \pi \cdot \Delta P}{4} \quad \left[ \frac{m^3}{min} \right]$$

Where:

| | |
|---|---|
| $F_{Bias}$ = | the biasing force of the spring |
| $Q_L$ = | the flow rate where the piston closes by being biased against the contact surface 32 and 34 |
| D = | the diameter in the area of the spring and/or in the area of the second inner circumference 38 |
| d = | the diameter indicated by reference number 36 In fig. 1a and 1b i.e. the outer diameter of the contact surfaces 32 and 34 |

The scale between the diameter d and the diameter D may be 1:2 or 1:3 or 1:4 or 1:5 or 1:6 or 1:7 or 1:8 or 1:9 or 1:10 or 1:20 or1:30 or 1:40 or 1:50 or 1:60 or 1:70 or 1:80 or 1:90 or 1:100 or higher.

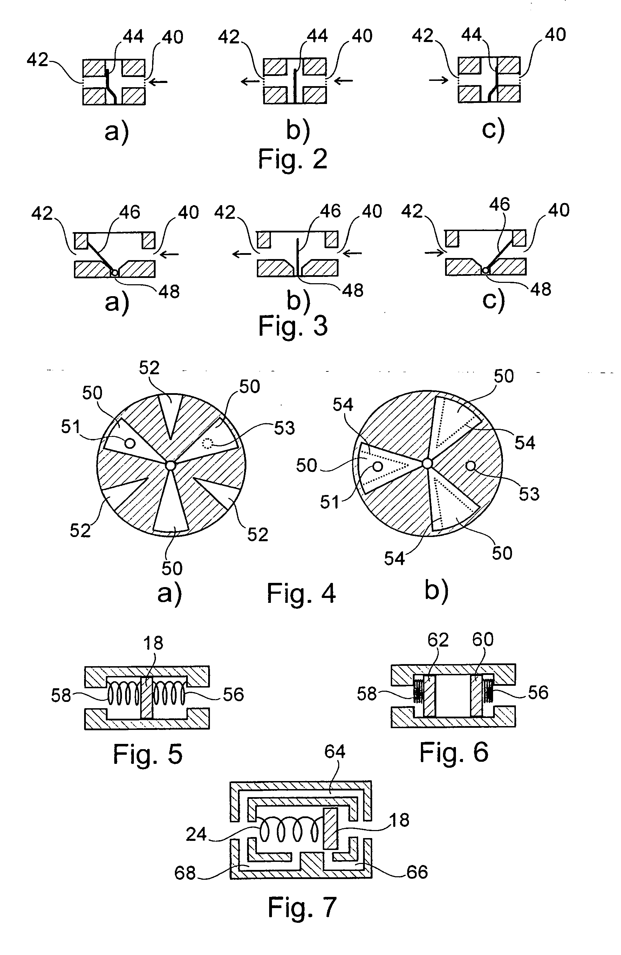

Figures 2a, 2b and 2c shows a different embodiment of the invention where a flexible plate 44 is attached to the side wall of the valve. When the pressure is substantially equal in the first end 40 and in the second end 42 the flexible plate is positioned as shown in fig 2b i.e. such that the fluid may flow through the valve. In fig. 2a the pressure is higher in the first -end 40 than in the second end 42. The result is that the flexible plate 44 is bend such that the valve is closed as the passage in the valve is blocked. The pressure difference needed to close the valve depends on the stiffness of the flexible plate. The plate may comprise a plastic material and/or a metallic material or any combination thereof. Fig. 2c shows a situation where the pressure is greater in the second end 42 than in the first end 40. This results in a closure of the valve in the opposite direction than shown in fig. 2a.

Figures 3a, 3b and 3c shows another embodiment of the invention as a substantially stiff plate 46 is pivotally connected to a side wall of the valve. In the pivotal connection 48 may be provided a biasing means such as a spiral spring. As described in relation to figure 2a-c the pressure difference between the first end 40 and the second end 42 determines the opening and closing of the valve.

Figures 4a and 4b shows yet another embodiment of the invention where the position of rotatable blades 50 block or unblock passages 52. In figure 4a the passages 52 are unblocked and thus the fluid may flow. In figure 4b the passages 52 overlab the passages which are indicated by the dotted line 54. In the figure is also shown a first leaking passage 51 and a second leaking passage 53. The first leaking passage is provided in one of the blades 50, while the second leaking passage is provided in a wall of the valve. In any embodiment of this invention the leaking passages may be provided in moving parts or non-moving parts of the valve. Further more the leaking passages according to any embodiment of this invention may be provided such that they are blocked or open depending on the position of the piston, blade or any other means for shutting off the valve.

In figure 5 is shown a different embodiment of the invention where the valve 18 is biased by a first biasing means 56 and a second biasing means 58.

Figure 6 shows a further embodiment of the invention wherein the valve comprises two pistons a first piston 60 and a second piston 62 each biased by first biasing means 56 and second biasing means 58 respectively.

Any of the aforementioned embodiments may comprise a leaking passage 28 as indicated In fig. 1a and 1b. The passage may also be provided in a part of the valve different from the piston 18 or the plates 44 and 46. Such embodiments are shown in figure 7 wherein a third leaking passage 64, a fourth leaking passage 66 and a fifth leaking passage 68 are provided. The third leaking passage is provided such that Independent of the position of the piston 18 the passage is always open. The fourth leaking passage 66 and the fifth leaking passage 68 are provided such that for some positions of the piston the passages are blocked. Any of the embodiments disclosed in this application may comprise any combination of first, second, third, fourth and fifth leaking passages.

**Claims**

1. An apparatus for controlling flow in a flowline under pressure, said apparatus (2) comprising

   - a flow passage having a first end (40) and a second end (42), and
   - hindering means (18) for reducing the flow In the flow passage, the hindering means (18) being arranged to move between a first and a second position (20,22) under influence of a pressure difference between the first end and the second end (40,42) of the flow passage,

   wherein the reduction of the flow in the flow passage is larger when the hindering means (18) is in the first and second position (20,22) than when the hindering means (18) is in an intermediate position between said first and second positions (20,22), said apparatus being **characterized in that** it allows flow in the flow passage whichever position the hindering means is in.

2. An apparatus according to claim 1, wherein the hindering means (18) is positioned in the first position (20) when the pressure in the second end (42) is higher than the pressure in the first end (40).

3. An apparatus according to claim 1 or 2, wherein the hindering means (18) is positioned in the second position (22) when the pressure in the first end (40) is higher than the pressure in the second end (42).

4. An apparatus according to any of claims 1 or 2, wherein the hindering means (18) is positioned in the first position (20) when the pressure difference between the second end (42) and the first end (40) is higher than a first predetermined closing value.

5. An apparatus according to any of claims 1 or 3, wherein the hindering means (18) is positioned in the second position (22) when the pressure difference between the first end (40) and the second end (42) is higher than a second predetermined closing value.

6. An apparatus according to claims 4 and 5, wherein the first predetermined closing value is substantially equal to the second predetermined closing value.

7. An apparatus according to any of the preceding claims, further comprising biasing means (24) adapted to bias the hindering means (18) towards a predetermined position.

8. An apparatus according to claim 7, wherein the predetermined position is a position between the first position (20) and the second position (22).

9. An apparatus according to claim 7, wherein the predetermined position is identical to the first position (20).

10. An apparatus according to claim 7, wherein the predetermined position is identical to the second position (22).

11. An apparatus according to any of claims 7-10, wherein the biasing means (24) is adjustable so as to change a biasing force and/or the predetermined position.

12. An apparatus according to claim 11, further comprising an electrical adjustable element adapted to change the biasing force.

13. An apparatus according to any of claims 11-12, wherein the biasing force and/or the predetermined position is adjusted dependent on a temperature.

14. An apparatus according to any of claims 11-13, wherein the biasing force and/or the predetermined position is adjusted dependent on pressure.

15. An apparatus according to any of claims 11-14, wherein the biasing force and/or the predetermined position is adjusted dependent on fluid properties.

16. An apparatus according to any of claims 7-15, wherein the biasing means (24) is a spring.

17. An apparatus according to any of the preceding claims, wherein the first and the second position (20,22) are provided with contact surfaces (32,34) adapted to collaborate with corresponding contact surfaces of the hindering means (18) so as to provide a substantially tight seal when the hindering means (18) is positioned in the first and the second position (20,22) respectively.

18. An apparatus according to claim 17, wherein at least a part of at least one contact surface comprises a sealing member.

19. An apparatus according to claim 18, wherein the sealing member comprises a resilient material.

20. An apparatus according to claim 18, wherein the sealing member comprises a ceramic material.

21. An apparatus according to any of the preceding claims, wherein the effective cross-sectional area of the flow passage is 800% larger when the hindering means (18) is in an intermediate position than when the hindering means (18) is in the first position (20) and/or the second position (22), such as 700% larger, such as 600% larger, such as 500% larger, such as 400% larger, such as 300% larger, such as 200% larger, such as 100% larger.

22. An apparatus according to any of claims 1-21, wherein the hindering means (18) is adapted to slide between the first and the second position (20,22).

23. An apparatus according to any of claims 1-22, wherein the hindering means (18) is adapted to rotate between the first and the second position (20,22).

24. An apparatus according to claim 23, wherein at least a part of the hindering means (18) is pivotally connected to the apparatus (2).

25. An apparatus according to any of the preceding claims, further comprising a leaking passage (30) adapted to provide a flow channel between the first end and the second end (40,42), when the hindering means (18) is positioned in the first position (20) and/or the second position (22).

26. An apparatus according to claim 25, wherein the leaking passage (30) is provided in the hindering means (18).

27. An apparatus according to any of the preceding claims, further comprising at least one pressure indicator adapted to indicate the pressure in at least a part of the flow passage.

28. An apparatus according to claim 27, wherein the apparatus (2) comprises at least one pressure indicator adapted to indicate pressure in the first end (40) and at least one pressure indicator adapted to indicate pressure in the second end (42).

29. An apparatus according to any of the preceding claims, wherein at least a part of the passage comprises a transparent material, so as allow visual inspection of the fluid and/or the position of the hindering means (18).

30. An apparatus according to any of the preceding claims, further comprising means for locking the hindering means (18) in the first position (20) and/or the second position (22) and/or an intermediate position.

31. An apparatus according to any of the preceding claims, wherein the apparatus comprises a metallic material selected from the group consisting of iron, steel, aluminium, magnesium, titanium, copper, brass, nickel, zinc, tin, lead, chrome, wolfram, bronze, gold, silver and platinum.

32. An apparatus according to any of the preceding claims, wherein the apparatus comprises a plastic material and/or a composite material and/or a fibre material.

33. An apparatus according to any of the preceding claims, wherein the apparatus comprises locking means adapted to lock a connector in a locking position, the connector being a connecting element of a flow line.

34. A tap comprising an apparatus according to any of the claims 1-33.

**Patentansprüche**

1. Vorrichtung zur Steuerung des Durchflusses in einer Durchflussleitung unter Druck, wobei die Vorrichtung (2) umfasst:

    - einen Durchflussbereich mit einem ersten Ende (40) und einem zweiten Ende (42) und
    - ein Hemmmittel (18) zur Reduzierung des Durchflusses im Durchflussbereich, wobei das Hemmmittel (18) derart angeordnet ist, dass es sich unter dem Einfluss eines Druckunterschieds zwischen dem ersten Ende und dem zweiten Ende (40, 42) des Durchflussbereichs zwischen einer ersten und einer zweiten Position (20, 22) bewegt,

wobei die Reduzierung des Durchflusses im Durchflussbereich größer ist, wenn sich das Hemmmittel (18) in der ersten und zweiten Position (20, 22) befindet, als in dem Fall, in dem sich das Hemmmittel (18) in eine Zwischenposition zwischen der ersten und der zweiten Position (20, 22) befindet,
wobei die Vorrichtung **dadurch gekennzeichnet ist, dass** sie einen Durchfluss im Durchflussbereich ermöglicht, gleichgültig, in welcher Position sich das Hemmmittel befindet.

2. Vorrichtung nach Anspruch 1, wobei das Hemmmittel (18) die erste Position (20) einnimmt, wenn der Druck am zweiten Ende (42) höher ist als der Druck am ersten Ende (40).

3. Vorrichtung nach Anspruch 1 oder 2, wobei das Hemmmittel (18) die zweite Position (22) einnimmt, wenn der Druck am ersten Ende (40) höher ist als der Druck am zweiten Ende (42).

4. Vorrichtung nach einem der Ansprüche 1 oder 2, wobei das Hemmmittel (18) die erste Position (20) einnimmt, wenn der Druckunterschied zwischen dem zweiten Ende (42) und dem ersten Ende (40) höher ist als ein vorher festgelegter Schließwert.

5. Vorrichtung nach einem der Ansprüche 1 oder 3, wobei das Hemmmittel (18) die zweite Position (22) einnimmt, wenn der Druckunterschied zwischen dem ersten Ende (40) und dem zweiten Ende (42) höher ist als ein zweiter vorher festgelegter Schließwert.

6. Vorrichtung nach den Ansprüchen 4 und 5, wobei der erste vorher festgelegte Schließwert im Wesentlichen gleich dem zweiten vorher festgelegten Schließwert ist.

7. Vorrichtung nach einem der vorhergehenden Ansprüche, weiterhin umfassend ein Vorspannmittel (24), das dazu eingerichtet ist, das Hemmmittel (18) gegenüber einer vorher festgelegten Position vorzuspannen.

8. Vorrichtung nach Anspruch 7, wobei die vorher festgelegte Position eine Position zwischen der ersten Position (20) und der zweiten Position (22) ist.

9. Vorrichtung nach Anspruch 7, wobei die vorher festgelegte Position identisch mit der ersten Position (20) ist.

10. Vorrichtung nach Anspruch 7, wobei die vorher festgelegte Position identisch mit der zweiten Position (22) ist.

11. Vorrichtung nach einem der Ansprüche 7- 10, wobei das Vorspannmittel (24) einstellbar ist, um die Vorspannkraft und/oder die vorher festgelegte Position zu verändern.

12. Vorrichtung nach Anspruch 11, weiterhin umfassend ein elektrisch einstellbares Bauteil, das dazu eingerichtet ist, die Vorspannkraft zu verändern.

13. Vorrichtung nach einem der Ansprüche 11-12, wobei die Vorspannkraft und/oder die vorher festgelegte Position in Abhängigkeit von einer Temperatur eingestellt werden.

14. Vorrichtung nach einem der Ansprüche 11-13, wobei die Vorspannkraft und/oder die vorher festgelegte Position in Abhängigkeit von Druck eingestellt werden.

15. Vorrichtung nach einem der Ansprüche 11-14, wobei die Vorspannkraft und/oder die vorher festgelegte Position in Abhängigkeit von Fluideigenschaften eingestellt werden.

16. Vorrichtung nach einem der Ansprüche 7-15, wobei das Vorspannmittel (24) eine Feder ist.

17. Vorrichtung nach einem der vorhergehenden Ansprüche, wobei die erste und die zweite Position (20, 22) mit Kontaktflächen (32, 34) versehen sind, die dazu eingerichtet sind, mit entsprechenden Kontaktflächen des Hemmmittels (18) zusammenzuwirken, um eine im Wesentlichen vollständige Dichtung bereitzustellen, wenn das Hemmmittel (18) die erste bzw. die zweite Position (20,22) einnimmt.

18. Vorrichtung nach Anspruch 17, wobei mindestens ein Teil mindestens einer Kontaktfläche ein Abdichtelement umfasst.

19. Vorrichtung nach Anspruch 18, wobei das Abdichtelement ein elastisches Material umfasst.

20. Vorrichtung nach Anspruch 18, wobei das Abdichtelement ein keramisches Material umfasst.

21. Vorrichtung nach einem der vorhergehenden Ansprüche, wobei die effektive Querschnittsfläche des Durchflussbereichs, wenn sich das Hemmmittel (18) in einer Zwischenposition befindet, 800 % größer ist als in dem Fall, dass das Hemmmittel (18) die erste Position (20) und/oder die zweite Position (22) einnimmt, wie 700 % größer, wie 600 % größer, wie 500 % größer, wie 400 % größer, wie 300 % größer, wie 200 % größer, wie 100 % größer.

22. Vorrichtung nach einem der Ansprüche 1-21, wobei das Hemmmittel (18) dazu eingerichtet ist, zwischen der ersten und der zweiten Position (20, 22) zu gleiten.

23. Vorrichtung nach einem der Ansprüche 1-22, wobei das Hemmmittel (18) dazu eingerichtet ist, zwischen der ersten und der zweiten Position (20, 22) zu drehen.

24. Vorrichtung nach Anspruch 22, wobei mindestens einen Teil des Hemmmittels (18) drehbar mit der Vorrichtung (2) verbunden ist.

25. Vorrichtung nach einem der vorhergehenden Ansprüche, weiterhin umfassend einen Abflussbereich (30), der dazu eingerichtet ist, einen Durchflusskanal zwischen dem ersten Ende und dem zweiten Ende (40, 42) bereitzustellen, wenn das Hemmmittel (18) die erste Position (20) und/oder die zweite Position (22) einnimmt.

26. Vorrichtung nach Anspruch 22, wobei der Abflussbereich (30) in dem Hemmmittel (18) vorgesehen ist.

27. Vorrichtung nach einem der vorhergehenden Ansprüche, weiterhin umfassend mindestens eine Druckanzeige, die dazu eingerichtet ist, den Druck in mindestens einem Teil des Durchflussbereichs anzuzeigen.

28. Vorrichtung nach Anspruch 27, wobei die Vorrichtung (2) mindestens eine Druckanzeige umfasst, die dazu eingerichtet ist, Druck am ersten Ende (40) anzuzeigen, und mindestens eine Druckanzeige, die dazu eingerichtet ist, Druck am zweiten Ende (42) anzuzeigen.

29. Vorrichtung nach einem der vorhergehenden Ansprüche, wobei mindestens ein Teil des Bereichs ein transparentes Material aufweist, um eine Sichtprüfung des Fluids und/oder der Position des Hemmmittels (18) zu ermöglichen.

30. Vorrichtung nach einem der vorhergehenden Ansprüche, weiterhin umfassend Mittel zum Sperren des Hemmmittels (18) in der ersten Position (20) und/oder der zweiten Position (22) und/oder einer Zwischenposition.

31. Vorrichtung nach einem der vorhergehenden Ansprüche, wobei die Vorrichtung ein metallisches Material umfasst, ausgewählt aus der Gruppe, bestehend aus Eisen, Stahl, Aluminium, Magnesium, Titan, Kupfer, Messing, Nickel, Zink, Zinn, Blei, Chrom, Wolfram, Bronze, Gold, Silber und Platin.

32. Vorrichtung nach einem der vorhergehenden Ansprüche, wobei die Vorrichtung ein Kunststoffmaterial und/oder ein Verbundmaterial und/oder ein Fasermaterial umfasst.

33. Vorrichtung nach einem der vorhergehenden Ansprüche, wobei die Vorrichtung Sperrmittel umfasst, die dazu eingerichtet sind, ein Verbindungsstück in einer Sperrposition zu sperren, wobei das Verbindungsstück ein Verbindungselement einer Durchflussleitung ist.

34. Hahn, umfassend eine Vorrichtung nach einem der Ansprüche 1-33.

**Revendications**

1. Appareil destiné à contrôler un écoulement dans une conduite sous pression, ledit appareil (2) comprenant

   - un passage d'écoulement possédant une première extrémité (40) et une deuxième extrémité (42), et
   - un moyen d'obstruction (18) pour réduire l'écoulement dans le passage d'écoulement, le moyen d'obstruction (18) étant disposé de manière à se déplacer entre une première et une deuxième position (20, 22) sous l'influence d'une différence de pression entre la première extrémité et la deuxième extrémité (40, 42) du passage d'écoulement,

   dans lequel la réduction de l'écoulement dans le passage d'écoulement est plus importante lorsque le moyen d'obstruction (18) se trouve dans la première et la deuxième position (20, 22) que lorsque le moyen d'obstruction (18) se trouve dans une position intermédiaire entre lesdites première et deuxième positions (20, 22),
   ledit appareil étant **caractérisé en ce qu'**il permet un écoulement dans le passage d'écoulement quelle que soit la position du moyen d'obstruction.

2. Appareil selon la revendication 1, dans lequel le moyen d'obstruction (18) est placé dans la première position (20) quand la pression dans la deuxième extrémité (42) est supérieure à la pression dans la première extrémité (40).

3. Appareil selon la revendication 1 ou 2, dans lequel le moyen d'obstruction (18) est placé dans la deuxième position (22) quand la pression dans la première extrémité (40) est supérieure à la pression dans la deuxième extrémité (42).

4. Appareil selon l'une quelconque des revendications 1 ou 2, dans lequel le moyen d'obstruction (18) est placé dans la première position (20) quand la différence de pression entre la deuxième extrémité (42) et la première extrémité (40) est supérieure à une première valeur de fermeture prédéterminée.

5. Appareil selon l'une quelconque des revendications 1 ou 3, dans lequel le moyen d'obstruction (18) est placé dans la deuxième position (22) quand la différence de pression entre la première extrémité (40) et la deuxième extrémité (42) est supérieure à une deuxième valeur de fermeture prédéterminée.

6. Appareil selon les revendications 4 et 5, dans lequel la première valeur de fermeture prédéterminée est essentiellement égale à la deuxième valeur de fermeture prédéterminée.

7. Appareil selon l'une quelconque des revendications précédentes, comprenant également un moyen de pression (24) adapté pour déplacer le moyen d'obstruction (18) vers une position prédéterminée.

8. Appareil selon la revendication 7, dans lequel la position prédéterminée est située entre la première position (20) et la deuxième position (22).

9. Appareil selon la revendication 7, dans lequel la position prédéterminée est identique à la première position (20).

10. Appareil selon la revendication 7, dans lequel la position prédéterminée est identique à la deuxième position (22).

11. Appareil selon l'une quelconque des revendications 7 à 10, dans lequel le moyen de pression (24) peut être réglé de manière à modifier une force de pression et/ou la position prédéterminée.

12. Appareil selon la revendication 11, comprenant également un élément réglable électrique adapté pour modifier la force de pression.

13. Appareil selon l'une quelconque des revendications 11 à 12, dans lequel la force de pression et/ou la position prédéterminée est réglée en fonction d'une température.

14. Appareil selon l'une quelconque des revendications 11 à 13, dans lequel la force de pression et/ou la position prédéterminée est réglée en fonction d'une pression.

15. Appareil selon l'une quelconque des revendications 11 à 14, dans lequel la force de pression et/ou la position prédéterminée est réglée en fonction des propriétés d'un fluide.

16. Appareil selon l'une quelconque des revendications 7 à 15, dans lequel le moyen de pression (24) est un ressort.

17. Appareil selon l'une quelconque des revendications précédentes, dans lequel la première et la deuxième position (20, 22) possèdent des surfaces de contact (32, 34) adaptées pour fonctionner avec les surfaces de contact correspondantes du moyen d'obstruction (18) de manière à former un joint essentiellement étanche quand le moyen d'obstruction (18) est respectivement placé dans la première et la deuxième position (20, 22).

18. Appareil selon la revendication 17, dans lequel au moins une partie d'au moins une surface de contact comprend un élément d'étanchéité.

19. Appareil selon la revendication 18, dans lequel l'élément d'étanchéité comprend un matériau résilient.

20. Appareil selon la revendication 18, dans lequel l'élément d'étanchéité comprend un matériau céramique.

21. Appareil selon l'une quelconque des revendications précédentes, dans lequel la section utile du passage d'écoulement est 800 % plus importante quand le moyen d'obstruction (18) se trouve dans une position intermédiaire que quand le moyen d'obstruction (18) se trouve dans la première position (20) et/ou la deuxième position (22), telle que 700 % plus importante, telle que 600 % plus importante, telle que 500 % plus importante, telle que 400 % plus importante, telle que 300 % plus importante, telle que 200 % plus importante, telle que 100 % plus importante.

22. Appareil selon l'une quelconque des revendications 1 à 21, dans lequel le moyen d'obstruction (18) est adapté pour coulisser entre la première et la deuxième position (20, 22).

23. Appareil selon l'une quelconque des revendications 1 à 22, dans lequel le moyen d'obstruction (18) est adapté pour tourner entre la première et la deuxième position (20, 22).

24. Appareil selon la revendication 23, dans lequel au moins une partie du moyen d'obstruction (18) est reliée de manière pivotante à l'appareil (2).

25. Appareil selon l'une quelconque des revendications précédentes, comprenant également un passage de fuite (30) adapté pour former un canal d'écoulement entre la première extrémité et la deuxième extrémité (40, 42) quand le moyen d'obstruction (18) est placé dans la première position (20) et/ou la deuxième position (22).

26. Appareil selon la revendication 25, dans lequel le passage de fuite (30) est ménagé dans le moyen d'obstruction (18).

27. Appareil selon l'une quelconque des revendications précédentes, comprenant également au moins un indicateur de pression adapté pour indiquer la pression dans au moins une partie du passage d'écoulement.

28. Appareil selon la revendication 27, dans lequel l'appareil (2) comprend au moins un indicateur de pression adapté pour indiquer la pression dans la première extrémité (40) et au moins un indicateur de pression adapté pour indiquer la pression dans la deuxième extrémité (42).

29. Appareil selon l'une quelconque des revendications précédentes, dans lequel au moins une partie du passage comprend un matériau transparent, de manière à permettre le contrôle visuel du fluide et/ou de la position du moyen d'obstruction (18).

30. Appareil selon l'une quelconque des revendications précédentes, comprenant également un moyen pour verrouiller le moyen d'obstruction (18) dans la première position (20) et/ou la deuxième position (22) et/ou une position intermédiaire.

31. Appareil selon l'une quelconque des revendications précédentes, dans lequel l'appareil comprend un matériau métallique choisi dans le groupe consistant en fer, acier, aluminium, magnésium, titane, cuivre, laiton, nickel, zinc, étain, plomb, chrome, tungstène, bronze, or, argent et platine.

32. Appareil selon l'une quelconque des revendications précédentes, dans lequel l'appareil comprend un matériau plastique et/ou un matériau composite et/ou un matériau fibreux.

33. Appareil selon l'une quelconque des revendications précédentes, dans lequel l'appareil comprend un moyen de verrouillage adapté pour verrouiller un raccord dans une position de verrouillage, le raccord étant un élément de raccordement d'une conduite.

34. Robinet comprenant un appareil selon l'une quelconque des revendications 1 à 33.

Fig. 1a

Fig. 1b

Fig. 2

Fig. 3

a)　　Fig. 4　　b)

Fig. 5

Fig. 6

Fig. 7

**EP 1 561 056 B1**

**Patent documents cited in the description**

- US 2498482 A